Europäisches Patentamt

European Patent Office

Office européen des brevets

(11) Publication number: **0 152 747**
**B1**

(12) **EUROPEAN PATENT SPECIFICATION**

(45) Date of publication of patent specification: **28.03.90**

(21) Application number: **85100226.1**

(22) Date of filing: **11.01.85**

(51) Int. Cl.⁵: **H 01 J 49/04**

(54) **Apparatus and method for applying a dissolved sample from a liquid chromatograph to a chemical ionization mass spectrometer.**

(30) Priority: **17.02.84 US 581476**

(43) Date of publication of application:
**28.08.85 Bulletin 85/35**

(45) Publication of the grant of the patent:
**28.03.90 Bulletin 90/13**

(84) Designated Contracting States:
**AT BE CH DE FR GB IT LI LU NL SE**

(56) References cited:
**US-A-4 055 987**

**ANALYTICAL CHEMISTRY, vol. 53, no. 9, August 1981, pages 1492-1497, American Chemical Society, Easton, Pennsylvania, US; E.D. HARDIN et al.: "Laser ionization mass spectrometry of nonvolatile samples"**

**PATENTS ABSTRACTS OF JAPAN, vol. 7, no. 123 (E-178)1268r, 27th May 1983; & JP-A-58 40 760**

(73) Proprietor: **AMERICAN CYANAMID COMPANY**
**1937 West Main Street P.O. Box 60**
**Stamford Connecticut 06904-0060 (US)**

(72) Inventor: **Stout, Steven James**
**668 Paxon Avenue**
**Mercerville New Jersey 08619 (US)**
Inventor: **DaCunha, Adrian**
**4 Billington Road**
**Hamilton Square New Jersey 08690 (US)**

(74) Representative: **Wächtershäuser, Günter, Dr.**
**Tal 29**
**D-8000 München 2 (DE)**

Courier Press, Leamington Spa, England.

# EP 0 152 747 B1

**Description**

Background of the invention

The present invention relates to an apparatus and method for transporting a sample, such as a dissolved liquid fraction from a liquid chromatograph, directly to a chemical ionization mass spectrometer.

When analyzing various mixtures by mass spectrometry, it is often necessary to first separate the individual components by liquid chromatography prior to any identification via mass spectral analysis. Existing liquid chromatograph-chemical ionization mass spectrometer interfaces, especially of the moving-belt design, rely upon the application of a liquid eluate to this moving belt in a chamber maintained at approximately atmospheric pressure cf. US—A—4055987. While atmospheric pressure at the point of solvent application simplifies the process of applying a liquid to a moving belt, it also necessitates the use of two vacuum locks. The reason for this vacuum environment is that a reduction in pressure is needed to reach the operating pressures required in the ion source (ionization chamber) of the mass spectrometer.

Each vacuum lock of these conventional liquid chromatograph-chemical ionization mass spectrometer units consists of a set of machined slits and an evacuated chamber evacuated by its own mechanical vacuum pump. Due to the presence of machined slits and evacuated chambers, existing moving-belt interfaces are rather large and cumbersome and are mounted to the mass spectrometer on a separate flange. To solve this problem, there is provided an evacuated single-chambered moving-belt interface unit according to claim 1 and a method for directly introducing a liquid chromatograph sample into a chemical ionization on mass spectrometer.

The present invention alleviates the above problems and contains a single-chambered interface unit into which eluate (sample) is applied. This not only eliminates unnecessary bulkiness but also eliminates the need for additional vacuum locks. This, in turn, further simplifies the interface unit because unnecessary hardware is no longer needed.

Furthermore, the interface unit of the present invention may be easily inserted into and removed from a chemical ionization mass spectrometer via the mass spectrometer's conventional solid probe inlet thereby alleviating the necessity of using special equipment in assembly and/or disassembly, as do conventional atmospheric moving belt interface units.

The present single-chambered moving-belt interface unit comprises a means for connecting the outlet of a liquid chromatograph, such that the liquid chromatographic eluate is deposited onto the moving belt of the unit. The apparatus of the present invention also contains a means for transferring (connecting and introducing) the liquid chromatographic sample, now dissolved, into the conventional chemical solid probe of the ionization chamber of a chemical ionization mass spectrometer.

In operation, standard connecting means, originating from the liquid chromatograph outlet, link the outlet from which a sample can be deposited onto the moving belt of the present interface unit.

The moving belt of the present apparatus is driven by some means, and this driving mechanism can be mounted either externally or internally.

In addition to the previously-described elements of the present interface unit, the chamber that houses the moving belt should be evacuated by any suitable means.

It also may be necessary to assist in the evaporation of the liquid chromatograph sample deposited onto the moving belt. Any suitable heating system may be incorporated into the present invention to so evaporate the samples.

Once the sample (eluate) is deposited onto the moving belt of the present interface unit and is evaporated, it is ready to be introduced into the ionization chamber of the chemical ionization mass spectrometer. This is accomplished by direct connecting of an evacuated probe leading from the evacuated chamber of the present invention and located such that the evaporated sample is easily transported to any conventional solid probe of such mass spectrometers.

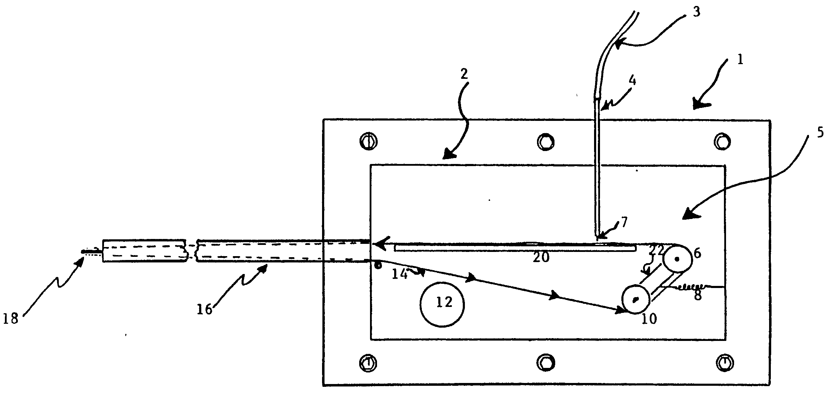

It is an object of the present invention, therefore, to provide an evacuated single-chambered moving belt interface unit for and a method of continuously applying the evaluate of a liquid chromatograph to a chemical ionization mass spectrometer through connection to the conventional solid probe inlet of said mass spectrometer. This and further objects will become apparent from the description of the drawing and detailed description of the preferred embodiment of the invention which follow.

Brief description of the drawing

The Figure shows a schematic diagram of one of the embodiments of the apparatus of the present invention.

Description of the preferred embodiment

Referring to the Figure, there is illustrated a liquid-chromatograph-chemical-ionization-mass-spectrometer interface unit, 1. The unit includes a vacuum housing, 2, having some means for maintaining the vacuum environment of the unit. In the Figure, a vacuum port, 12, connects a vacuum pump (not shown) to the housing, 2.

The eluate from the chromatograph, 7, is transported from the liquid chromatograph outlet via liquid chromatographic tubing, 3, linked to a capillary applicator, 4, passing through the vacuum housing into the interior chamber, 5, of the present interface unit.

2

The eluate is then deposited onto a continuous (moving) belt, 14. This internally-located moving belt, 14, is driven by some driving means. In the embodiment shown in the Figure, an idler/pulley system, 10, over which the moving belt, 14, loops, fulfills this function of moving the belt because the idler/pulley system connects to a drive shaft (not shown) mounted onto a mounting block, 22, that passes through the interior chamber, 5, and vacuum housing, 2, to an external electric motor (not shown). This electric motor provides the drive to rotate several guides, rollers and pulleys, not shown, in moving the belt. Furthermore, an extension spring, 8, connecting the drive pulley, 6, of the idler/pulley system through these guides and rollers, maintains that system under tension for the belt to move properly.

Additionally, it may be necessary to evaporate the deposited eluate. This is accomplished by a heater, 20, located within the inner chamber of the present invention in such a manner as to be located beneath the moving belt and at the point where eluate is deposited onto said moving belt.

Once the eluate is deposited and evaporated, it moves along with the moving belt into an evacuated probe, 16, and into the solid probe tip (notched probe tip), 18, of the ionization chamber of a mass spectrometer. The eluate is deposited into the solid probe, 18, and the moving belt, 14, then moves back into the evacuated probe, 16, and into the inner chamber, 5, of the evacuated housing, 2. It is guided with rollers and such, not shown, along the way.

The method of the present invention now permits the continuous introduction of a solution (sample), 7, at flow rates of up to 200 µL/minute of methanol, into a chemical ionization mass spectrometer. For instance, a sample, 7, originating from chromatograph, not shown, and transported through chromatographic tubing, 3, to capillary applicator, 4, is deposited onto moving belt, 14, of the present interface unit. This unit is under reduced pressure.

Then, sample, 7, is evaporated by heater, 20, located directly beneath capillary applicator, 4, and moving belt, 14, and the sample, 7, is then transferred via the moving belt, 14, to an evacuated probe, 16, connected to a notched probe tip, 18, leading to the ionization chamber of the chemical ionization mass spectrometer (not shown).

The moving belt then continues back through evacuated probe, 16, to housing, 2, around the idler/pulley system, 10, to again move a sample through the unit.

Examples of the introduction of samples into a chemical ionization mass spectrometer under a variety of conditions utilizing the interface unit of the present invention are further illustrated in Table 1.

TABLE 1
Operating pressures and principal ions

| CH$_3$OH Flow rate (µL/min) | Source pressure (torr) | Interface pressure (torr) | Principal ions (m/z) |
|---|---|---|---|
| 0 | 0.40 (CH$_4$) | 0.26 | 17$^+$ (CH$_5^+$) |
| | | | 29$^+$ (C$_2$H$_5^+$) |
| | | | 41$^+$ (C$_3$H$_5^+$) |
| 100 | 0.25 | 0.35 | 65$^+$ (CH$_3$OH)$_2$H$^+$ |
| | | | 97$^+$ (CH$_3$OH)$_3$H$^+$ |
| 200 | 0.40 | 0.70 | |
| 100 | 0.40$^a$ | — | 33$^+$ (CH$_3$OH)H$^+$ |
| | | | 57$^+$ (C$_4$H$_9^+$) |
| 100 | 0.45$^a$ | — | 57$^+$ (C$_4$H$_9^+$) |

$^a$ Balance from isobutane
(1 torr ≅133 Pa)

**Claims**

1. A moving-belt interface unit connecting the outlet of a liquid chromatograph with a conventional solid probe of the ionization chamber of a chemical ionization mass spectrometer, said interface unit comprising: an evacuated chamber within a housing, means for connecting said outlet of said liquid chromatograph to said interface unit, means for depositing a sample originating from said liquid chromatograph outlet onto said moving belt located within said housing, means for driving said moving belt and means for transferring said sample to said conventional solid probe of said ionization chamber, characterized in that said interface unit (1) comprises a capillary applicator (4) having one end connected to a chromatographic tubing (3) leading from said outlet of said liquid chromatograph and having the other end positioned in an evacuated single chamber (5) housing said moving belt (14), such that said sample (7) from said liquid chromatograph is deposited on said moving belt (14) within said evacuated single chamber (5).

2. An evacuated single-chambered moving-belt interface unit according to Claim 1 additionally comprising: means for evacuating said unit's single chamber.

3. An evacuated single-chambered moving-belt interface unit according to Claim 2 additionally comprising: means for heating and thereby evaporating said sample.

4. An evacuated single-chambered moving-belt interface unit according to Claim 1, wherein said conventional solid probe is a notched probe tip of said ionization chamber of said chemical ionization mass spectrometer.

5. A method for directly introducing a liquid chromatograph sample into a chemical ionization mass spectrometer, said method comprising: introducing said sample into an evacuated single-chambered moving-belt interface unit under reduced pressure, depositing said sample into a moving belt located in said chamber, evaporating said sample and transferring said sample to the notched probe tip of the ionization chamber of said chemical ionization mass spectrometer.

**Patentansprüche**

1. Eine Interface-Einheit mit Förderband, welche den Auslaß eines Flüssigkeitschromatographen mit einer herkömmlichen Feststoffsonde der Ionisationskammer eines Massenspektrometers mit chemischer Ionisierung verbindet, wobei die Interface-Einheit umfaßt: eine evakuierte Kammer in einem Gehäuse, Einrichtungen, um den Auslaß des Flüssigkeitschromatographen an die Interfaceeinheit anzuschließen, Einrichtungen, um eine aus dem Flüssigkeitschromatographenauslaß stammende Probe auf dem Förderband abzuscheiden, das in dem Gehäuse angeordnet ist, Einrichtungen zum Antreiben des Förderbandes und Einrichtungen zum Transferieren der Probe zu der herkömmlichen Feststoffsonde der Ionisationskammer, dadurch gekennzeichnet, daß die Interface-Einheit (1) einen kapillaren Applikator (4) umfaßt, dessen eines Ende an eine chromatographische Schlauchleitung (3) angeschlossen ist, die von dem Auslaß des Flüssigkeitschromatographen wegführt, und dessen anderes Ende in einer evakuierte Einzelkammer (5) positioniert ist, die das Förderband (14) aufnimmt, und zwar derart, daß die Probe (7) aus dem Flüssigkeitschromatographen auf dem Förderband (14) innerhalb der evakuierten Einzelkammer (5) abgeschieden wird.

2. Evakuierte einkämmerige Interface-Einheit mit Förderband gemäß Anspruch 1, zusätzlich umfassend: Einrichtungen, um die Einzelkammer der Einheit zu evakuieren.

3. Evakuierte einkämmerige Interface-Einheit mit Förderband gemäß Anspruch 2, zusätzlich umfassend: Einrichtungen, um die Probe zu erhitzen und dabei zu verdampfen.

4. Evakuierte einkämmrige Interface-Einheit mit Förderband gemäß Anspruch 1, wobei die herkömmliche Feststoffsonde eine eingekerbte Sondenspitze der Ionisationskammer des Massenspektrometers mit chemischer Ionisierung ist.

5. Verfahren zum direkten Einbringen einer Probe eines Flüssigkeitschromatographen in ein Massenspektrometer mit chemischer Ionisierung, wobei das Verfahren umfaßt: Einbringen der Probe in eine evakuierte einkämmerige Interface-Einheit mit Förderband unter verringertem Druck, Abscheiden der Probe auf einem in der Kammer angeordneten Förderband, Verdampfung der Probe und Überführung der Probe zu der eingekerbten Sondenspitze der Ionisationskammer des Massenspektrometers mit chemischer Ionisierung.

**Revendications**

1. Unité d'interface à courroie mobile reliant la sortie d'un appareil de chromatographie liquide à une sonde solide classique de la chambre d'ionisation d'un spectromètre de masse à ionisation chimique, ladite unité d'interface comprenant: une chambre sous vide à l'intérieur d'un boîtier, des moyens pour relier ladite sortie dudit appareil de chromatographie liquide à ladite unité d'interface, des moyens pour déposer un échantillon provenant de ladite sortie de l'appareil de chromatographie liquide sur ladite courroie mobile située à l'intérieur dudit boîtier, des moyens pour entraîner ladite courroie mobile, et des moyens pour transférer ledit échantillon sur ladite sonde solide classique de ladite chambre d'ionisation, caractérisée par le fait que ladite unité d'interface (1) comprend un applicateur capillaire (4) dont l'une des extrémités est reliée à un tube chromatographique (3) partant de ladite sortie dudit appareil de chromatographie liquide et dont l'autre extrémité est positionnée dans une chambre unique sous vide (5) recevant ladite courroie mobile (14), de telle sorte que ledit échantillon (7) provenant dudit appareil de chromatographie liquide soit déposé sur ladite courroie mobile (14) à l'intérieur de ladite chambre unique sous vide (5).

4

2. Unité d'interface à courroie mobile et à chambre unique sous vide selon la revendication 1, comprenant en outre: des moyens pour faire le vide dans ladite chambre unique de l'unité.

3. Unité d'interface à courroie mobile et à chambre unique sous vide selon la revendication 2, comprenant en outre: des moyens pour chauffer et, par là, faire évaporer ledit échantillon.

4. Unité d'interface à courroie mobile et à chambre unique sous vide selon la revendication 1, dans laquelle ladite sonde solide classique est une pointe de contact entaillée de ladite chambre d'ionisation dudit spectromètre de masse à ionisation chimique.

5. Procédé pour introduire directement un échantillon provenant d'un appareil de chromatographie liquide dans un spectromètre de masse à ionisation chimique, ledit procédé comprenant: l'introduction dudit échantillon dans une unité d'interface à courroie mobile et à chambre unique sous vide, sous pression réduite, le dépôt dudit échantillon sur une courroie mobile située dans ladite chambre, l'évaporation dudit échantillon, et le transfert dudit échantillon sur la pointe de contact entaillée de la chambre d'ionisation dudit spectromètre de masse à ionisation chimique.

1